# EUROPÄISCHE PATENTSCHRIFT

(11) **EP 1 239 303 B1**
(45) Veröffentlichungstag und Bekanntmachung des Hinweises auf die Patenterteilung: **22.10.2008**
(21) Anmeldenummer: 01105520.9
(22) Anmeldetag: 06.03.2001
(51) Int. Cl.: G01T 7/00, G01T 1/178, G01F 23/288

(54) **Verfahren zur Erkennung und Unterdrückung von Fremdstrahlungseinflüssen bei radiometrischen Messungen**
Method for detection and suppression of extraneous radiation influences in radiation measurements
Procédé pour la détection et la suppression de l'influence de rayonnements étrangers lors de mesures radiométriques

(43) Veröffentlichungstag der Anmeldung: 11.09.2002
(73) Patentinhaber: Berthold Technologies GmbH & Co. KG, 75323 Bad Wildbad (DE)
(72) Erfinder: Pfleger, Manfred, 75323 Bad Wildbad (DE)
(74) Vertreter: Frank, Gerhard

(56) Entgegenhaltungen:
- DE-A- 2 622 223
- DE-A- 19 711 124
- US-A- 5 646 409

## Beschreibung

Die Erfindung betrifft ein Verfahren zur Erkennung und Unterdrückung von Fremdstrahlungseinflüssen bei radiometrischen Messungen.

### Technischer Hintergrund

Radiometrische Messstrecken können durch Änderungen der Intensität der Umgebungsstrahlung, wie sie z.B. bei Schweißnahtprüfungen mit Roentgenquellen oder Radioisotopen auftreten kann, erheblich beeinträchtigt werden. Bei Füllstandsmessungen täuscht diese zusätzliche Strahlung einen zu niedrigen Wert des Füllstandes vor, was leicht zu einem Überlaufen der Behälter führen kann. Besonders anfällig für solche Störeinflüsse sind Systeme mit Plastik-Stabdetektoren, weil diese in der Regel ohne eine Abschirmung betrieben werden und gleichzeitig auf Grund ihrer relativ großen Abmessungen eine hohe Ansprechempfindlichkeit aufweisen.

### Stand der Technik

Um das Auftreten von Fremdstrahlungseinflüssen zu erkennen und entsprechende Sicherungsmaßnahmen einleiten zu können, werden teilweise zusätzliche Detektoren (Fremdstrahlungsdetektoren), außerhalb des Strahlenfeldes der radiometrischen Messstrecke angeordnet, um Veränderungen der Umgebungsstrahlung unabhängig von Veränderungen der Intensität der Messstreckenstrahlung feststellen zu können.

Eine andere Methode besteht darin, das Auftreten von Fremdstrahlungseinfluss über spezifische Veränderungen (z.B. zusätzliche Photo-Peaks) im Impulshöhenspektrum des Detektors der radiometrischen Messstrecke selbst festzustellen. Dies setzt Detektoren voraus, deren Spektrum deutlich ausgeprägte Photopeaks aufweist, die Rückschlüsse auf die Strahlungsenergie zulassen, wie dies z.B. bei Detektoren mit den häufig verwendeten NaJ(TI)-Szintillatoren der Fall ist.

Bei Plastikszintillatoren treten keine Photopeaks auf, jedoch lassen sich aus der Form der Spektren durch die darin positionierten Compton-Kanten Rückschlüsse auf aufgrund von Fremdstrahlung im Strahlungsspektrum enthaltene Gamma-Energien ziehen.

Aus dem zeitlichen Verlauf der Intensität, insbesondere aus der Schnelligkeit von Intensitätsänderungen, kann ebenfalls auf das Auftreten von unerwünschten Strahlungseinflüssen geschlossen werden. Eine solche Vorgehensweise zeigt die EP 0 615 626 B1: Hier wird unter "Fremdstrahlung" der Einfluss von sporadisch wirksamen Strahlungsquellen verstanden, wie sie in Abhängigkeit von den äußeren Messbedingungen bei der Werkstoffprüfung auftreten können. Bei dieser Lösung wird aus einem untypischen zeitlichen Verlauf (z.B. schneller Anstieg) der Impulszählraten des dem Plastikszintillator nachgeschalteten Photomultipliers auf das Vorliegen von Fremdstrahlung geschlossen. Unter der Voraussetzung, dass für diese Fremdstrahlung ein stabiler Wert nach Durchlaufen eines Übergangszeitraums angenommen wird, kann nach Erreichen dieses neuen, stabilisierten Wertes ein Korrekturwert berechnet werden, mit dem dann die Messung fortgesetzt werden kann. Dieses Verfahren erlaubt somit bei einer bestimmten 'Ablaufcharakteristik' der Fremdstrahlung eine Fortführung der Messung, ist aber prinzipiell bedingt auf eine signifikante Änderung der Impulszählrate als typisches Anzeichen für das Auftreten der hier definierten Fremdstrahlung angewiesen. Sobald die Änderung der Impulszählrate durch eine Fremdstrahlungsquelle in der Größenordnung der bei der Messung auftretenden "regulären" Impulsratenänderungen liegt (z.B. beim Einsatz von Rührwerken in der Messstrecke), ist dieses Verfahren nicht mehr anwendbar, da dann keine Schwellen für die Änderung der Impulsraten mehr gesetzt werden können, bei deren Über/Unterschreiten zuverlässig auf das Auftreten von Fremdstrahlung geschlossen werden kann.

In einfacheren Fällen lässt sich Fremdstrahlungseinfluss auch durch signifikant über den Messwerten im ungestörten Betrieb liegende Messwerte oder durch eine Übersteuerung des Detektors durch zu hohe Strahlungsintensitäten erkennen; nicht alle unerwünschten Fremdstrahlungen geben sich aber in dieser Weise zu erkennen.

Es ist eine bekannte Technologie im Bereich der Messung von radioaktiver Strahlung, durch Setzen von Schwellen in einem gemessenen Impulshöhenspektrum mittels Diskriminatoren diese in Messkanäle aufzuteilen, deren Zählraten getrennt erfasst und ausgewertet werden können.

Die DE 197 11 124 A1 macht sich diese Technologie für Zwecke der Aufspürung radioaktiver Störstrahlung relativ zu einer weitgehend konstanten Hintergrund- oder Untergrundstrahlung zu Nutze, beispielsweise für Kontaminationsmessungen. Als Normalkanal wird derjenige Kanal verwendet, in dem die Hintergrundstrahlung (permanent) gemessen wird, zusätzlich wird ein weiterer Kanal definiert, in dem das typische Strahlungsmaximum einer erwarteten oder gesuchten Störstrahlung liegt. Durch Vergleich der Zählraten in diesen beiden Kanälen kann die Intensität einer Störstrahlung annähernd bestimmt werden, der absolute Wert der Untergrundstrahlung im Normkanal interessiert hierbei nicht.

Für radiometrische Messungen einer physikalischen Messgröße wie z.B. des Füllstandes eines Behälters liegt dagegen die Strahlung eines zur Messung der Messgröße eingesetzten Messstrahlers im Messkanal, also eine sich verändernde Größe, deren Wert aus sich ändernden gemessenen Zählraten im Messkanal abgeleitet wird. Die Messung der Intensität einer Störstrahlung als solcher ist wegen der sich ändernden Größe der Zählraten im Messkanal (je nach Wert der Messgröße) nicht möglich und auch nicht vorrangig. Wünschenswert ist es jedoch, auch bei Auftreten einer Störstrahlung die Messung der Messgröße zumindest eingeschränkt fortsetzen zu können, was auch Ziel der erstgenannten EP 0 615 626 B2 ist, beim Gegenstand der genannten DE 197 11 124 A1wiederum aber keine Rolle spielt, da der Wert der im Normalkanal ermittelten Untergrundstrahlung als solcher nicht weiter interessiert, bzw. sein Mittelwert bekannt ist.

### Darstellung der Erfindung

Es ist Aufgabe der Erfindung, beim Betrieb einer radiometrischen Messstrecke auftretende Änderungen der Intensität der Umgebungsstrahlung zuverlässig zu erkennen und unter Eliminierung dieser Einflüsse die radiometrische Messung fortzusetzen.

Diese Aufgabe wird mit den Merkmalen des Patentanspruchs 1 gelöst.

Der Grundgedanke der Erfindung besteht darin, einen zweiten Kanal als nahezu vollwertigen (wenn auch weniger empfindlichen) zweiten Messkanal, als "Ersatzkanal" EK bezeichnet, zu etablieren, der im "Störfall" zur Lieferung der Messwerte der Messgröße herangezogen wird. Hierzu dient die Anwendung der Kalibrierungsfunktionen, was auch als Eichung bezeichnet werden kann. Es werden somit im Endeffekt zwei parallele Messungen durchgeführt, die eine als Normalmessung, wenn durch Vergleich der Messwerte (nicht unmittelbar der Impulsraten) ein durch die Kalibrierung vorgebbarer Wert der Verknüpfung in einem vorgebbaren Toleranzbereich bleibt, dann werden die Messwerte aus dem Messkanal zur Auswertung ausgegeben, und eine Ersatzmessung im "Ersatzkanal", wenn dieser Toleranzbereich verlassen wird, dann werden die Messwerte aus dem Ersatzkanal zur Auswertung ausgegeben.

Dieses Verfahren bringt zwar eine statistisch bedingte Verschlechterung der Genauigkeit des Messergebnisses mit sich, da bei Erkennung von Fremdstrahlung auf die Auswertung der Zählrate aus dem ausgeblendeten Impulsamplitudenbereichdes Messkanals verzichtet wird, ermöglicht aber eine Weiterführung der Messung. Damit ist sichergestellt, dass das Auftreten von Störstrahlung und die damit zwangsläufig im Messkanal auftretende Verfälschung der Messwerte nicht zu unter Umständen kritischen Zuständen beim Messablauf führt, beispielsweise durch Ausgabe zu geringer Füllstandswerte.

Die erfindungsgemäße Lösung erhöht somit die Sicherheit und Zuverlässigkeit radiometrischer Messungen erheblich.

Vorteilhafte Ausgestaltungen sind den abhängigen Ansprüchen zu entnehmen.

### Kurze Beschreibung der Zeichnungen:

Am Ausführungsbeispiel einer radiometrischen Füllstandsmessung soll das erfindungsgemäße Verfahren erläutert werden, es zeigen:
- Figur 1:: Aufbau einer ersten Füllstandsmessanlage gemäß dem Stand der Technik,
- Figur 2:: Aufbau einer zweiten Füllstandsmessanlage gemäß dem Stand der Technik,
- Figur 3A-E:: Darstellung jeweils eines typischen Spektrums bei Verwendung eines ⁶⁰Co-Strahlers bei verschiedenen Füllständen F in einer Füllstandmessanlage gemäß Figur 1 oder Figur 2,
- Figur 4:: Darstellung des Amplitudenspektrums der Nulleffektstrahlung bei einer Füllstandsmessanlage gemäß Figur 1 oder Figur 2,
- Figur 5:: Darstellung einer Kalibrierfunktion für Messkanal und Ersatzkanal gemäß der Erfindung,
- Figur 6:: Amplitudenspektren und Diskriminatorschwellen für ⁶⁰Co, ¹³⁷Cs und ¹⁹²Ir für den Ersatzkanal bei 60 Co-Messstrecke,
- Figur 7:: gedehntes 192 Ir-Spektrum mit Diskriminatorschwellen für für ⁶⁰Co und ¹³⁷Cs,
- Figur 8-15:: Darstellung typischer Plateau-Messungen, jeweils für ⁶⁰Co, ¹³⁷Cs, ¹⁹²Ir und Nulleffektstrahlung, jeweils im Messkanal und im Ersatzkanal,
- Figur 16:: ein Blockschaltbild einer Anordnung zur Aufteilung des Impulshöhenspektrums in Impulsraten des Messkanals und des Ersatzkanals,
- Figur 17:: ein Flussdiagramm zum Ablauf der Messung zur Erkennung von Fremdstrahlung und zur Messwertausgabe entweder des vom Messkanal oder vom Ersatzkanal gelieferten Messwertes (z.B.Füllstandswertes), und
- Figur 18:: Impulszählratenverhältnis Messkanal/Ersatzkanal in Abhängigkeit von der Messgrösse Füllstand F.

### Beschreibung des Standes der Technik

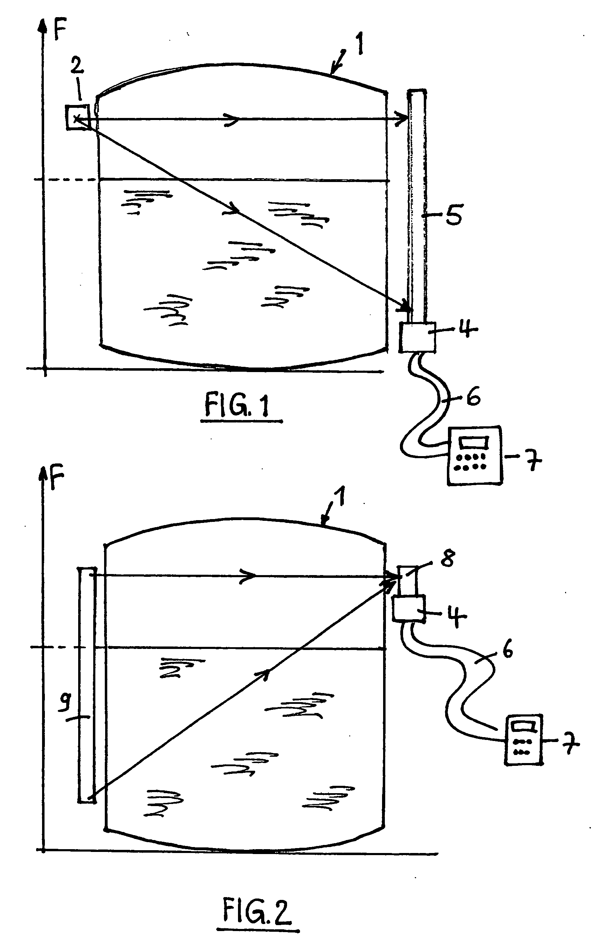

Typische Füllstandsmessanlagen sind im Prinzip entsprechend Figur 1 oder Figur 2 aufgebaut. Sie bestehen in den Grundausführungen entweder aus einer punktförmigen Strahlungsquelle 2 kombiniert mit einem Detektor 4 mit stabförmigen Szintillator 5 (Figur 1) oder einer stabförmigen Strahlenquelle 9 kombiniert mit einem Detektor 4 mit punktförmigen Szintillator 8 (Figur 2). Es können auch beide Anordnungen kombiniert und mit mehreren Strahlenquellen aufgebaut sein.

Das Ausführungsbeispiel gemäß Figur 1 stellt eine Füllstandsmessanlage für einen Tank 1 bestehend aus einer punktförmigen Strahlenquelle 2 und einem Szintillatationsdetektor 4 mit einem stabförmigen Plastikszintillator 5 dar.

Die Szintillationssonde 4 ist dabei über ein Kabel 6 mit einem Auswertegerät 7 verbunden. Das Auswertegerät 7 kann auch in die Sonde integriert sein.

Bei solchen Anordnungen tritt mit zunehmendem Füllstand eine zunehmende Absorption und Streuung der Messstrahlung durch das Füllmedium im Tank 1 auf, wodurch die Intensität der auf den Detektor auftreffenden Strahlung mit steigendem Füllstand abnimmt.

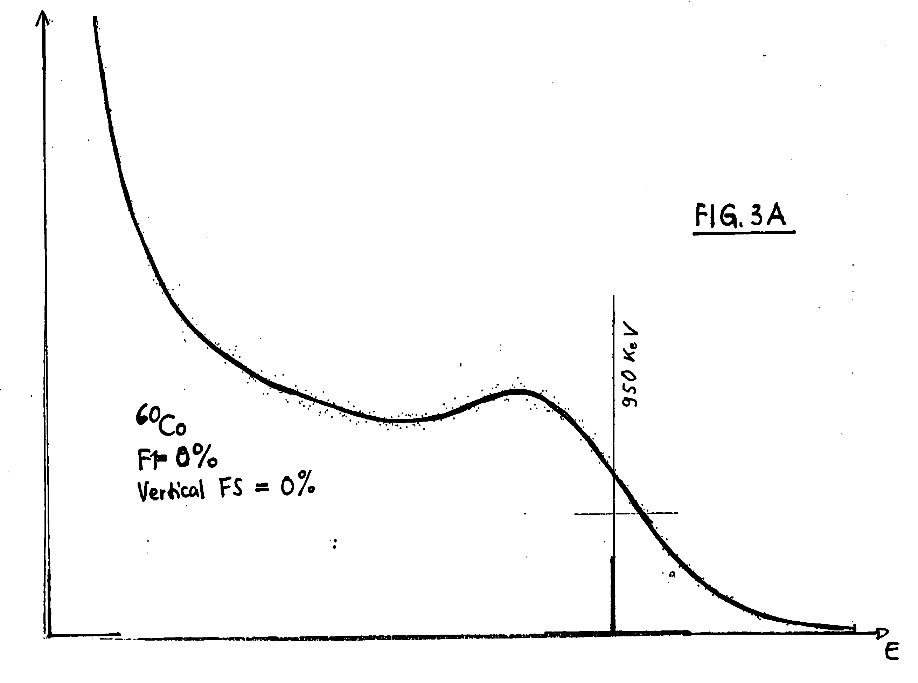

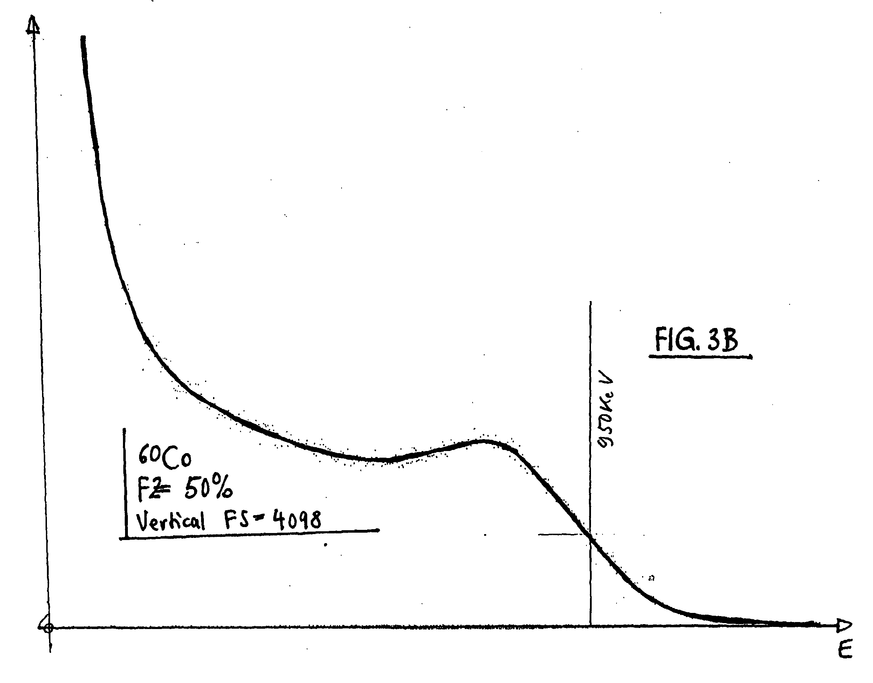

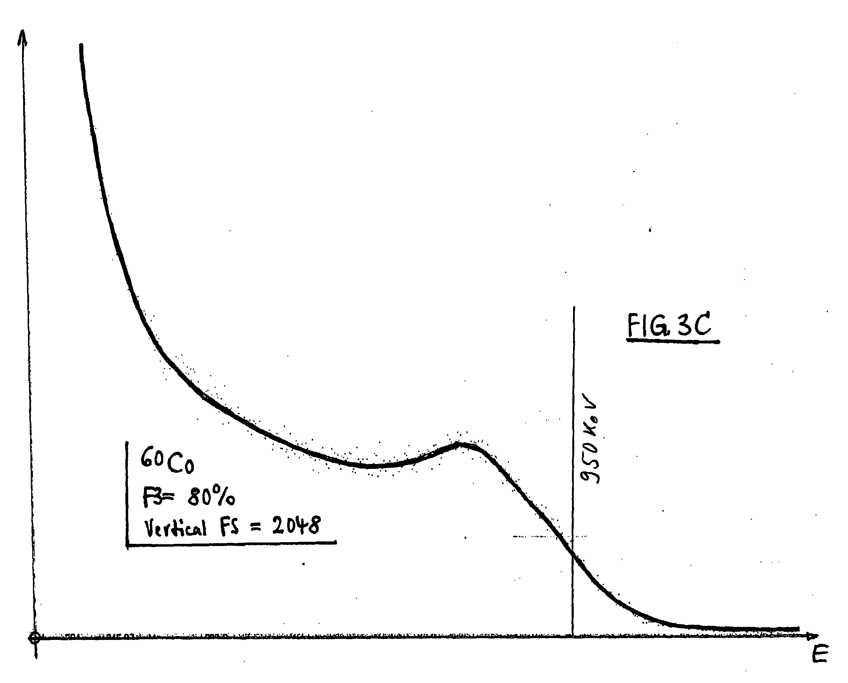

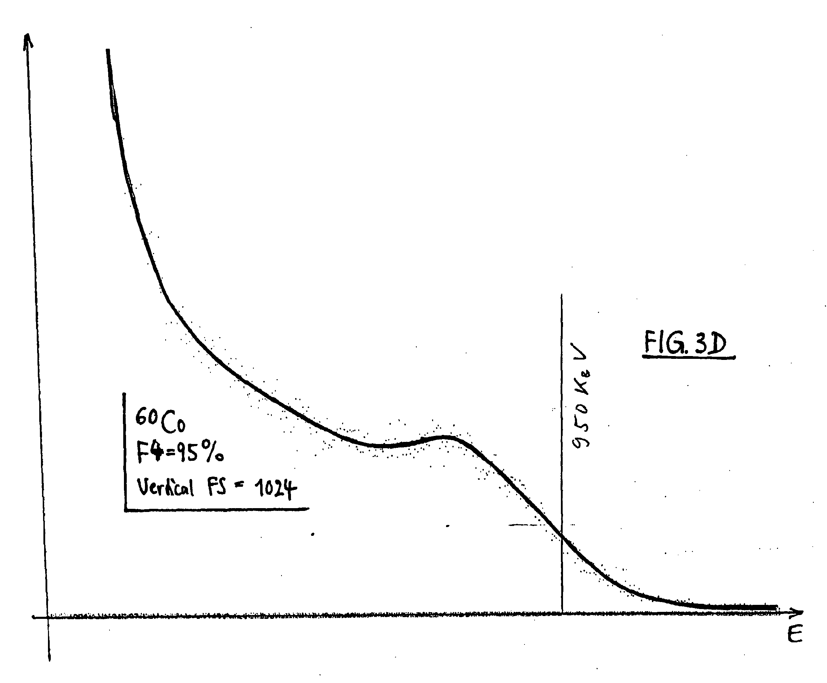

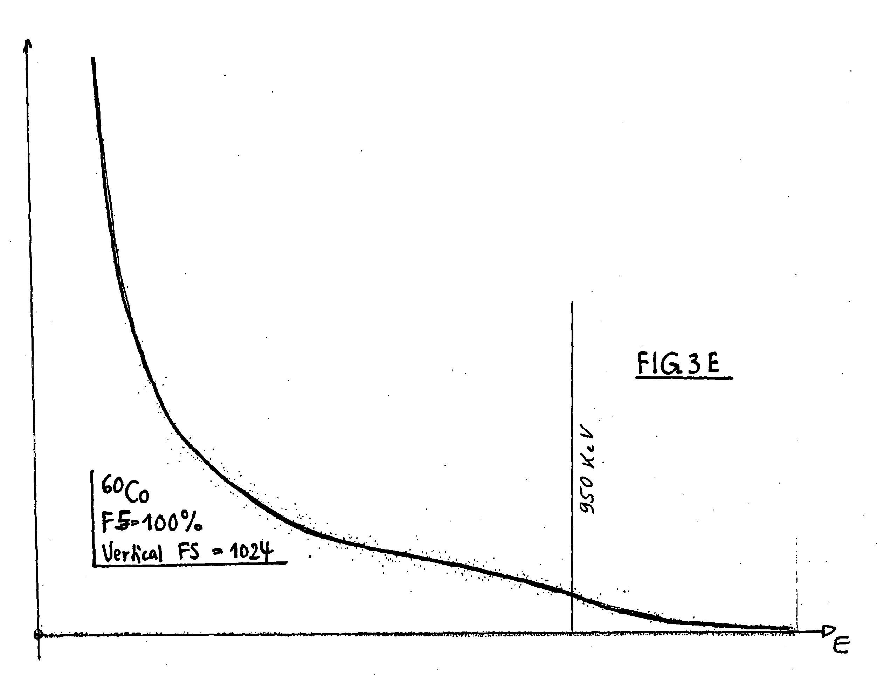

Wie die bei unterschiedlichen Füllständen mit einem ⁶⁰Co-Strahler aufgenommenen Spektren (Figur 3) zeigen, wird mit zunehmendem Füllstand F1...F5 die Comptonkante bei 950 keV immer flacher, der Compton-Peak immer weniger ausgeprägt, und der Anteil kleiner Impulse immer größer.

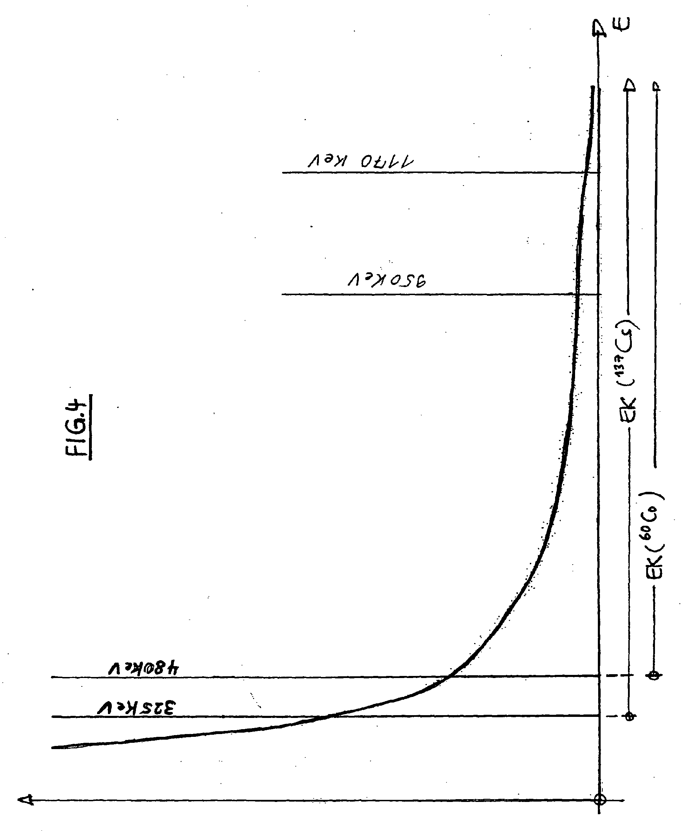

Erklären lässt sich dies dadurch, dass mit steigendem Füllstand der Anteil der Streustrahlung und der Nulleffekt-Strahlung zunehmen, dass die Energie der Streustrahlung naturgemäß geringer ist als die Energie der primären Messstreckenstrahlung und dass das Nulleffekt-Spektrum (Figur 4) zu kleinen Energien hin vergleichsweise stark ansteigt.

Um eine möglichst hohe Zählausbeute und eine hohe Stabilität der Zählausbeute zu erzielen, wird möglichst der gesamte nutzbare Teil des Spektrums (Messkanal) zur Ableitung der Messwerte genutzt. Dies hat zur Folge, dass eventuell auftretende Fremdstrahlung auch dann die Zählrate beeinflusst, wenn ihre Energie kleiner als die der Messstreckenstrahlung ist.

### Beschreibung der Erfindung

Erfindungsgemäß wird zusätzlich zum Messkanal MK ein Ersatzkanal EK derart festgelegt, dass die Empfindlichkeit für Fremdstrahlung möglichst gering ist. Um dies zu erreichen, wird eine auf ca. 20% reduzierte Ansprechempfindlichkeit im Ersatzkanal EK in Kauf genommen.

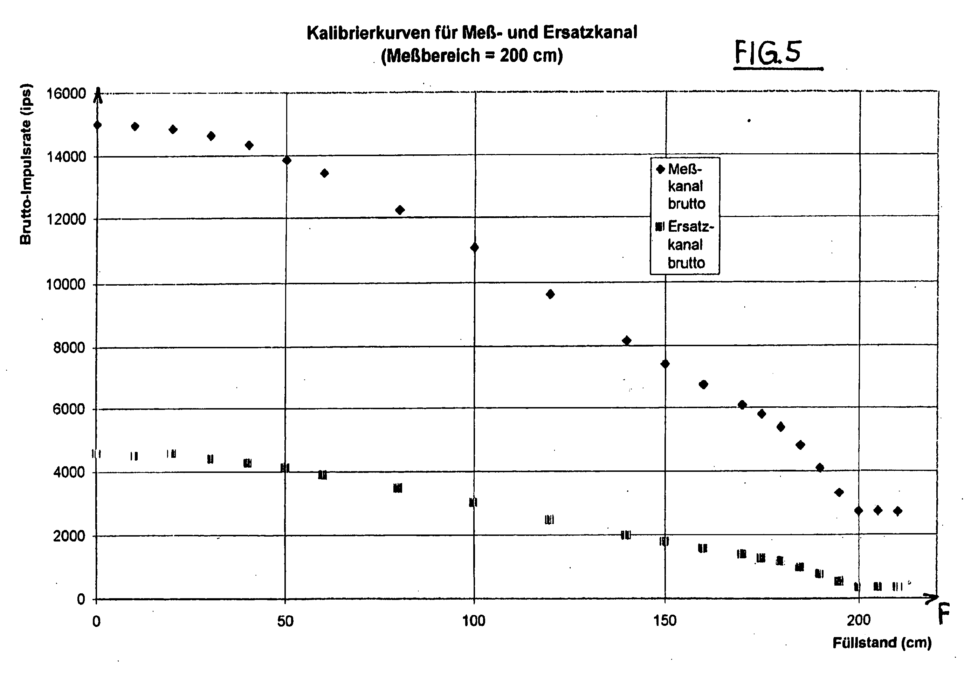

Die Ableitung der Messgrösse, hier des Füllstandes F, aus der vom Szintillator gemessenen Impulsrate erfolgt mittels einer Kalibrierfunktion (Figur 5). Diese kann durch Berechnung und/oder Messung bestimmt werden. Die Einflüsse von Streustrahlung und Nulleffektstrahlung werden dabei mit erfasst.

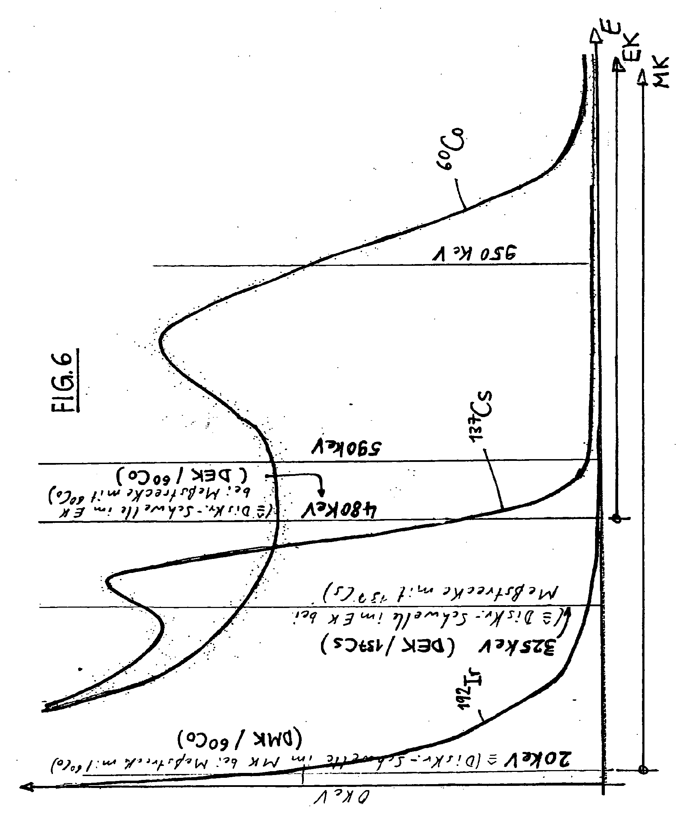

Figur 6 zeigt die Amplitudenspektren von ⁶⁰Co, ¹³⁷Cs und ¹⁹²Ir im Vergleich. Es ist ersichtlich, dass ¹⁹²Ir nicht in den oberen Teil des ⁶⁰Co Spektrums einstreut und dass auch der Schwerpunkt des ¹³⁷Cs-Spektrums deutlich oberhalb des ¹⁹²Ir-Spektrums liegt.

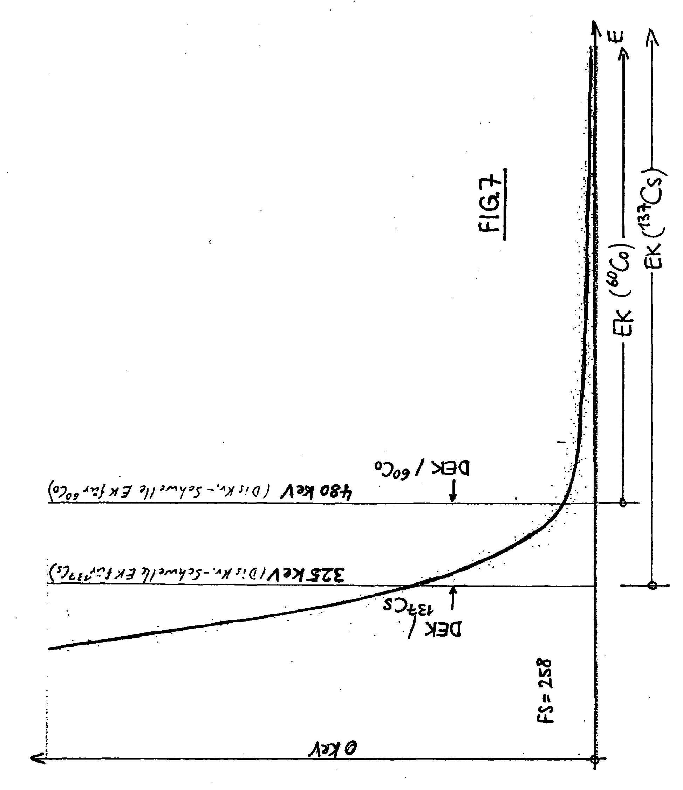

Die daraus erfindungsgemäß erfolgende Festlegung der genutzten Impulsspektrenbereiche ist in Figur 6 am Beispiel von ¹⁹²Ir als Fremdstrahlungsquelle dargestellt. ¹⁹²Ir hat von den üblicherweise verwendeten Fremdstrahlungsquellen die höchste Energie. Die anderen üblichen Strahlenquellen wie ⁹⁰Se liegen energiemäßig niedriger und sind daher weniger problematisch. Figur 7 zeigt das Amplitudenspektrum von ¹⁹²Ir mit 8-fach gedehnter Vertikalachse. Man sieht, dass in den Energiebereich oberhalb von 480 keV praktisch keine ¹⁹²Ir-Strahlung mehr einstreut.

Entsprechend dem Verlauf dieser Spektren empfiehlt sich für den Messkanal MK eine Diskriminatorschwelle DMK von ca. 20 keV und für den Ersatzkanal EK eine Diskriminatorschwelle DEK von etwa 480 keV bei Verwendung von ⁶⁰Co bzw. 325 keV bei Verwendung von ¹³⁷Cs als Messstrahler, wie in Figur 6 dargestellt.

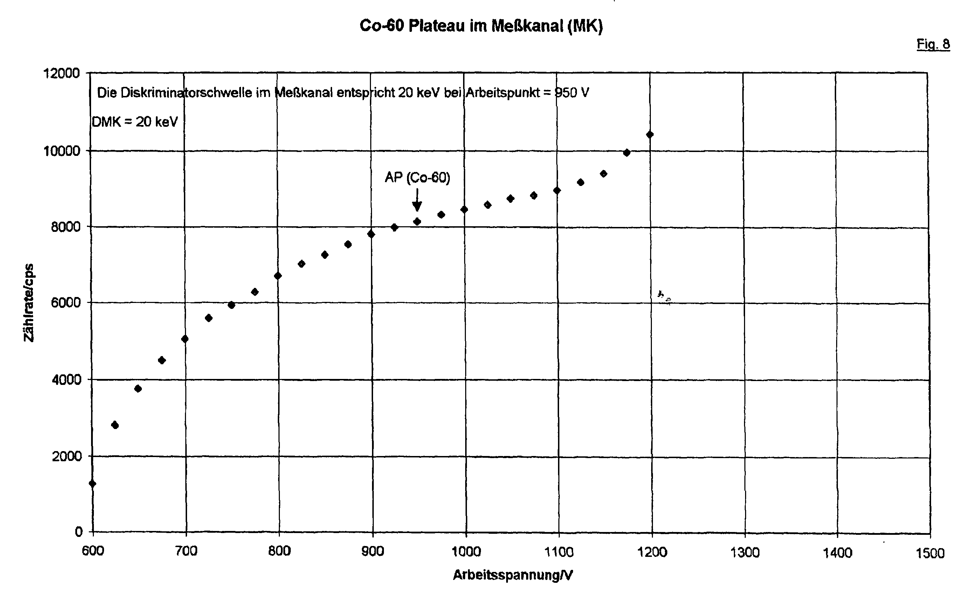

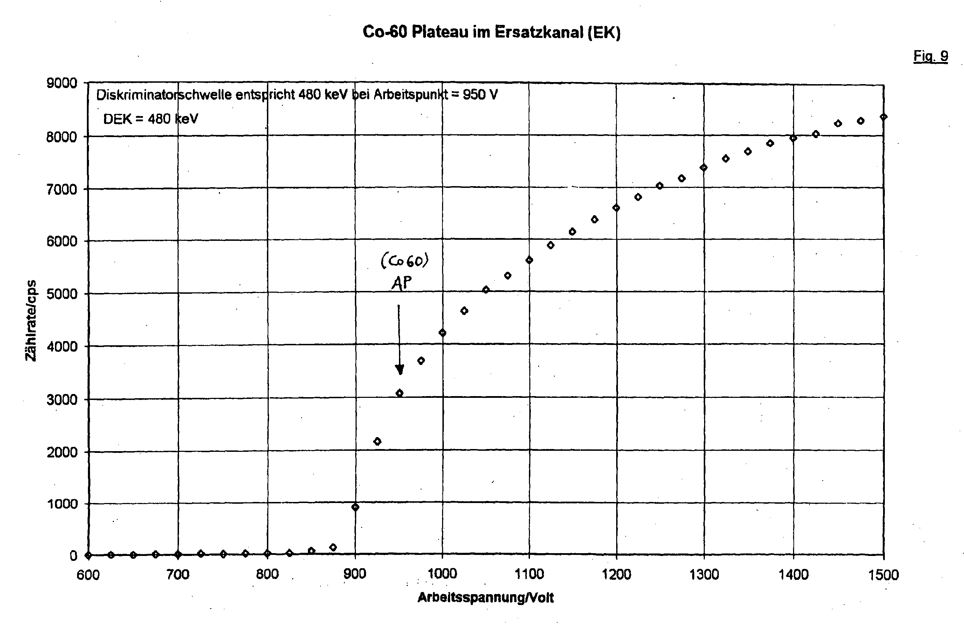

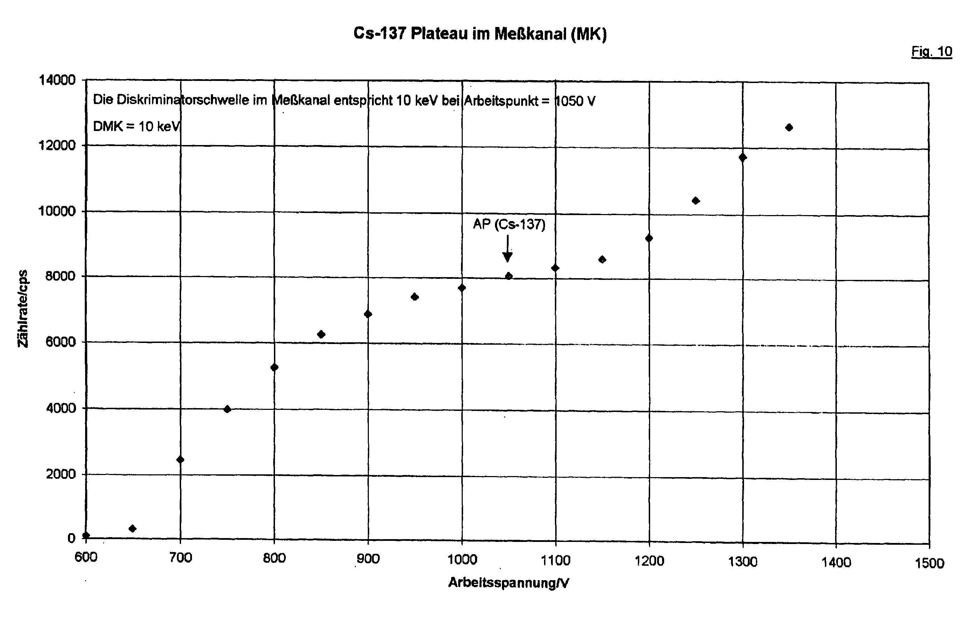

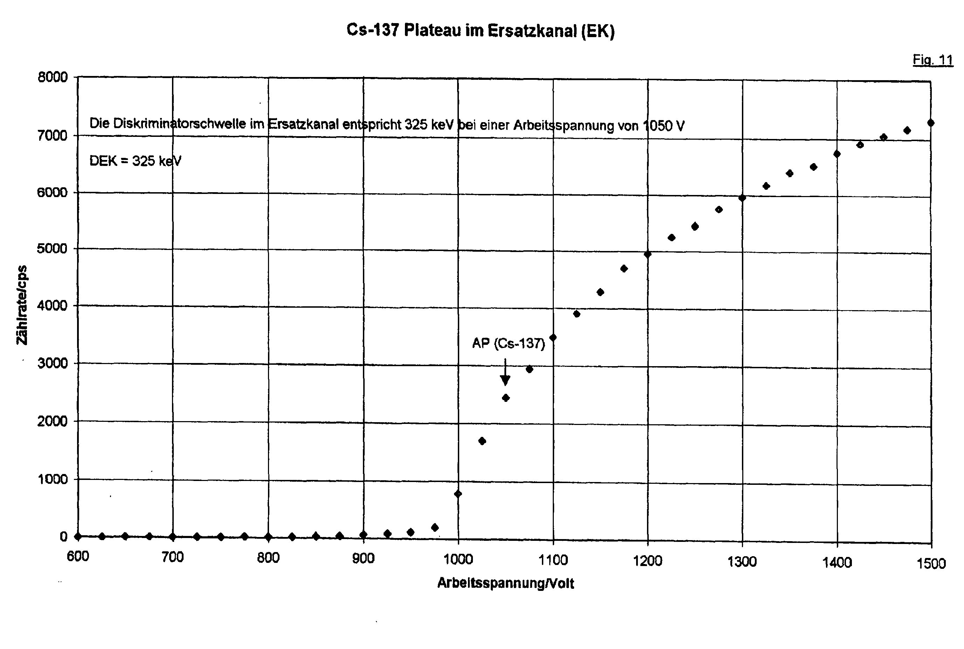

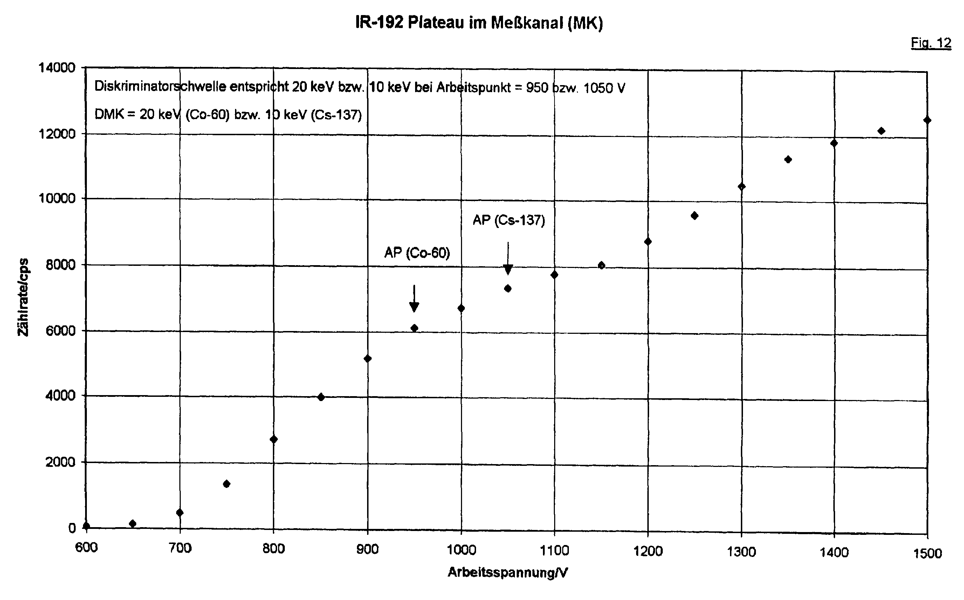

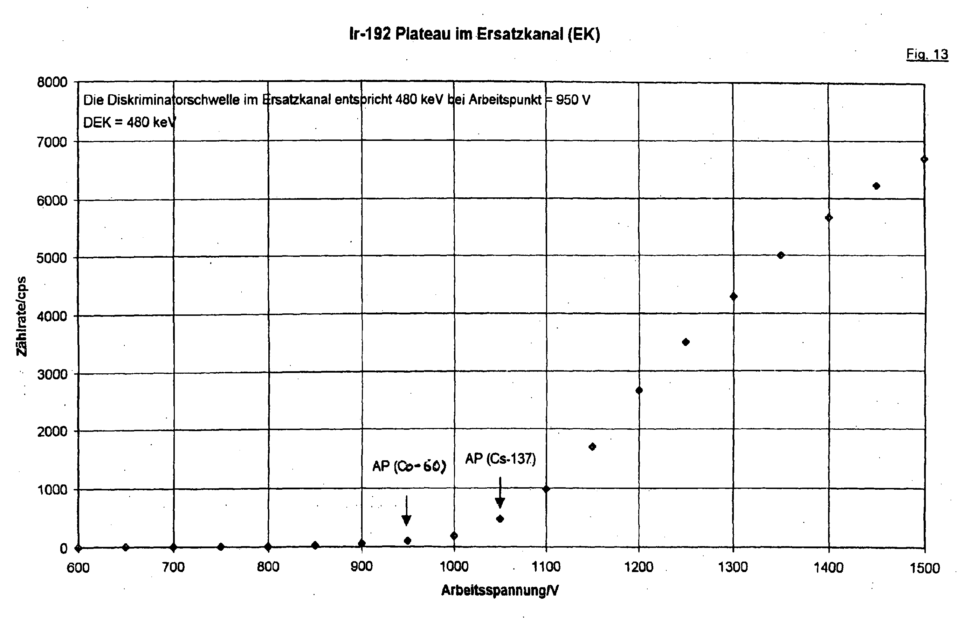

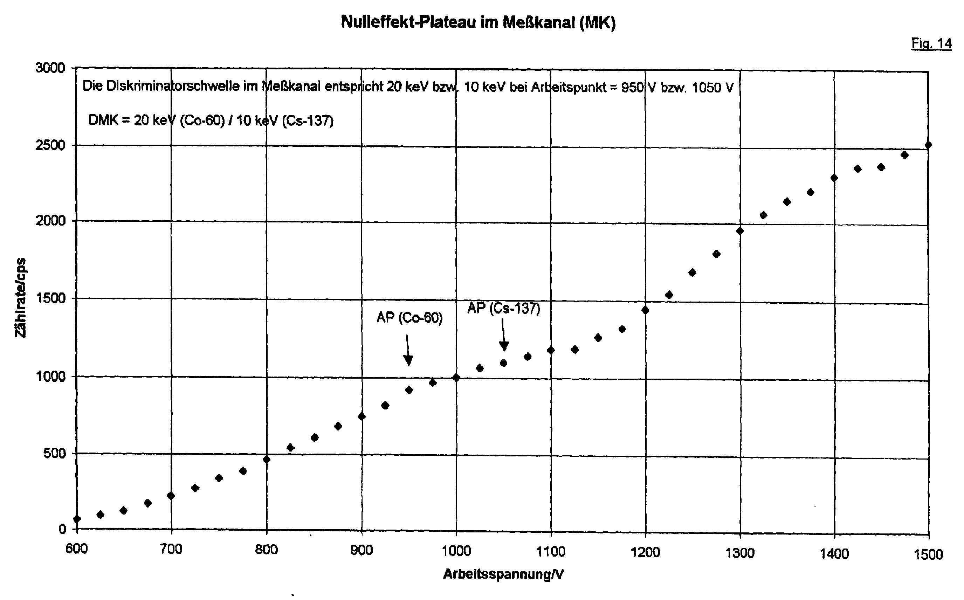

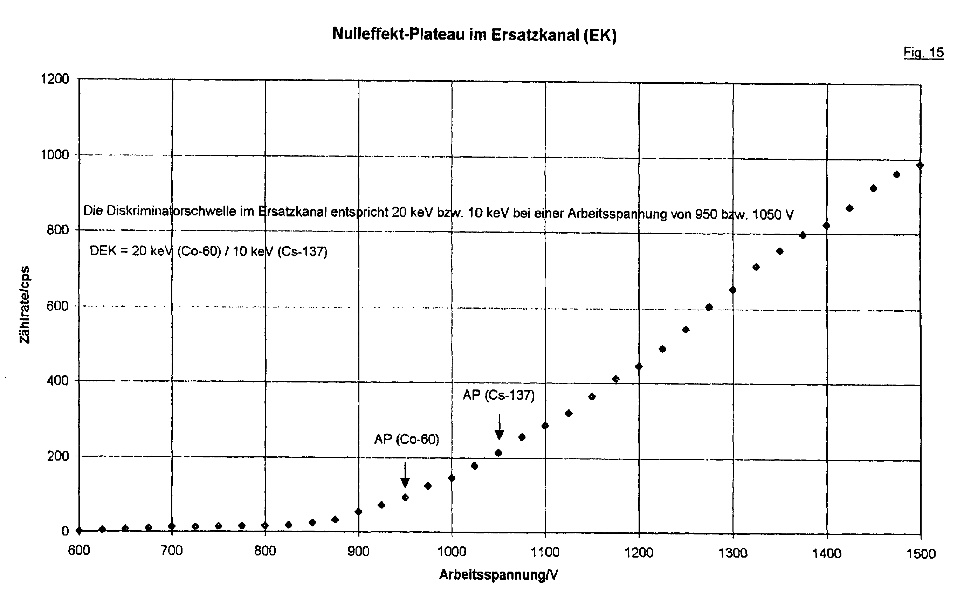

Mit diesen Einstellungen ergeben sich in der Darstellung als Plateaukurve für die genannten Strahlenquellen ⁶⁰Co und ¹³⁷Cs und Diskriminatorschwellen DMK und DEK die in den Figuren 8-15 dargestellten Verhältnisse.

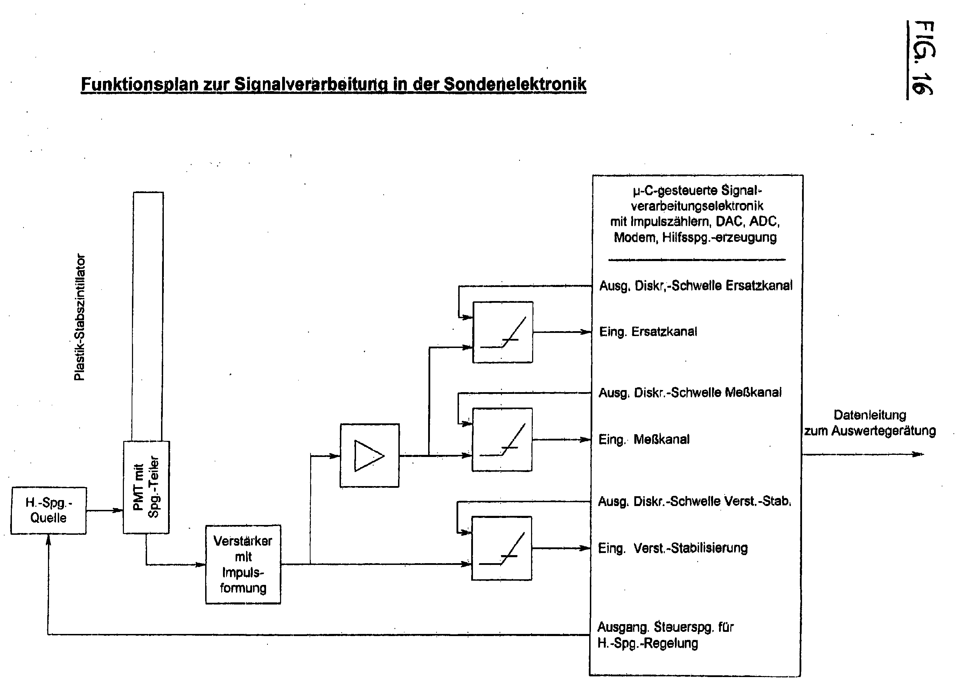

Figur 16 zeigt ein Blockschaltbild der Signalverarbeitung in der Szintillationssonde 4. Die Szintillationssonde 4 enthält einen Plastik-Stabszintillator 21 mit einer dem Messbereich entsprechenden Länge sowie einen Photovervielfacher mit einem Spannungsteiler 23, der von der Hochspannungsquelle 22 gespeist wird. Die Anodenimpulse 24 werden mittels eines Verstärkers mit Impulsformung 26 in der üblichen Weise verstärkt und geformt. Die Ausgangsimpulse 27 werden direkt bzw. über eine weitere Verstärkerstufe auf die Eingänge der zur Abgrenzung der Spektralbereiche verwendeten Integraldiskriminatoren 30,31,32 gegeben.

Der Integraldiskriminator 32 dient in bekannter Weise zur Ansteuerung eines Regelkreises für die Stabilisierung der Amplitude der Szintillationsimpulse. Seine Ansprechschwelle 43 ist so eingestellt, dass nur etwa 5% der gesamten Impulsrate erfasst werden. Die Einstellung der Amplitude erfolgt dabei über eine Steuerspannung 40, über die die Ausgangsspannung der Hochspannungsquelle 22 eingestellt wird. Zur Erzielung einer ausreichend großen Amplitudendynamik werden die Verstärkerimpulse 27 nochmals mittels des Verstärkers 28 verstärkt. Mit den verstärkten Impulsen 29 werden dann die beiden Integraldiskriminatoren 30 und 31 angesteuert.

Über den Integraldiskriminator 30 werden die Analogimpulse aus dem dem Messkanal MK zugeordneten Bereich des Impulshöhenspektrums erfasst und in Digitalimpulse zur Ansteuerung des Einganges des Messkanals 38 umgeformt. Die Diskriminatorschwelle 42 (DMK) wird hierzu auf einen Pegel entsprechend etwa 20 keV eingestellt, so dass im Messkanal MK praktisch alle Impulse des nutzbaren impulshöhenbereiches erfasst werden.

Über den Integraldiskriminator 31 wird der Eingang 33 des Ersatzkanals EK angesteuert. Die Diskriminatorschwelle 41 (DEK) wird hierzu auf einen Pegel entsprechend etwa 480 keV bei ⁶⁰Co bzw. 325 keV bei ¹³⁷Cs eingestellt, so dass bei Auslegung für ⁶⁰Co praktisch kein und bei Auslegung für ¹³⁷Cs nur ein geringer Anteil der ¹⁹²Ir-Impulse in den Ersatzkanal einstreut (siehe Figur 6).

Die weitere Signalverarbeitung erfolgt mittels einer rechnergesteuerten Elektronik 36.

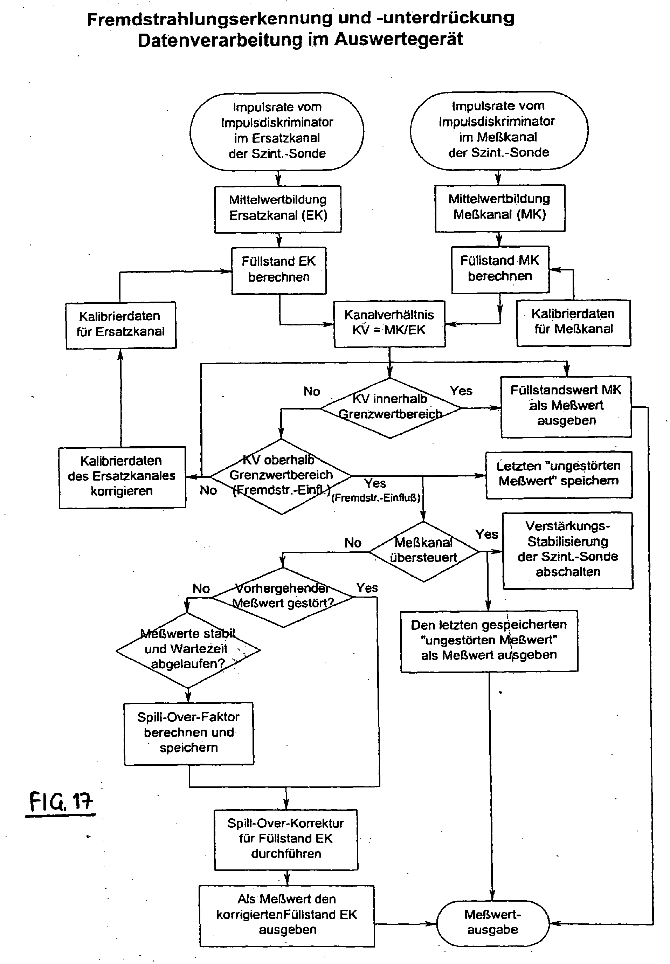

Die wichtigsten Funktionen der Elektronik 36 zur Erkennung und Unterdrückung der Fremdstrahlung erforderlichen Signalverarbeitung sind im Flussdiagramm (Figur 17) dargestellt. Aus den Impulsen an den Ausgängen der Integraldiskriminatoren 30 und 31 werden über Intervalle von 0,5 s Mittelwerte der Impulsraten gebildet und an das Auswertegerät 7 (Figur 1) übertragen. Dort erfolgt die eigentliche, zur Glättung der statistischen Schwankungen erforderliche Mittelwertbildung. Aus diesen Mittelwerten werden periodisch auf Basis der hinterlegten Kalibrierfunktionen KFM und KFE die Messwerte (Füllstandswerte) ZMK für den Messkanal MK und ZEK für den Ersatzkanal EK berechnet und das Verhältnis ZMK/ZEK (Kanalverhältnis) "Messkanal/Ersatzkanal" bestimmt.

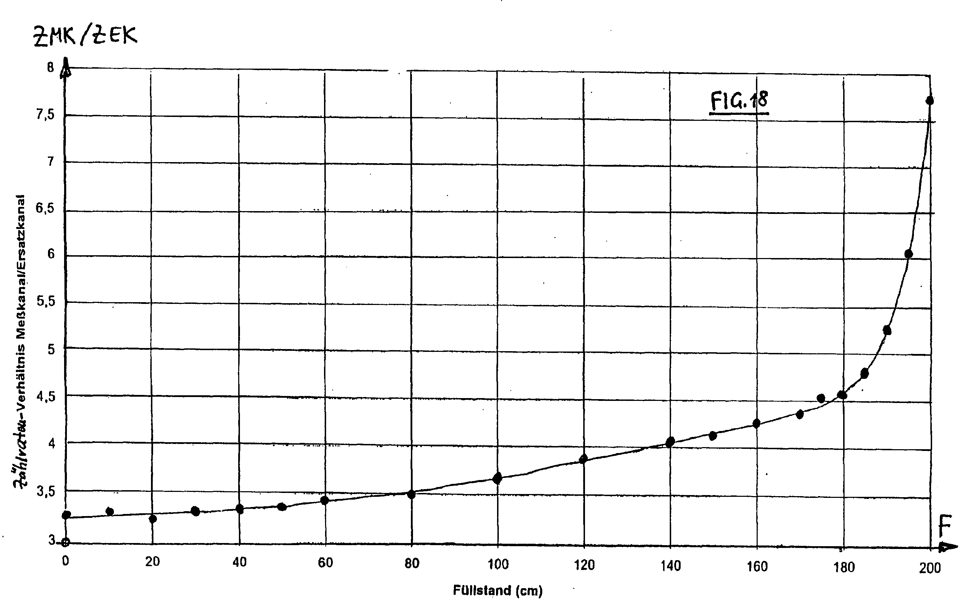

Das Kanalverhältnis ZMK/ZEK beträgt im ungestörten Betrieb und bei ordnungsgemäßer Kalibrierung bei allen Messwerten (Füllstandswerten) stets 1. Dies ist, wie Figur 18 zeigt, wegen der sich mit dem Messwert (Füllstand) ändernden Form der Impulshöhenspektren nicht der Fall, wenn man das Kanalverhältnis auf die Impulsraten bezieht.
- Liegt das Kanalverhältnis ZMK/ZEK innerhalb einer gewissen zulässigen Bandbreite (z.B. +/- 10%) bei 1, dann wird daraus abgeleitet, dass kein Fremdstrahlungseinfluss vorliegt und der im Messkanal MK ermittelte Messwert ZMK (Füllstandswert) wird ausgegeben.
- Liegt das Verhältnis ZMK/ZEK dagegen außerhalb dieser Bandbreite, dann wird daraus abgeleitet, dass ein Fremdstrahlungseinfluss vorliegt und es wird geprüft, in welcher Richtung der Grenzwert überschritten wurde:
   -- Ist der Wert ZMK/ZEK größer als der obere Grenzwert, dann wird daraus abgeleitet, dass kein Fremdstrahlungseinfluss vorliegt, sondern dass die Kalibrierfunktion KFE des Ersatzkanales EK fehlerhaft ist und es wird der im Messkanal MK ermittelte Füllstandswert ZMK als Messwert ausgegeben. Außerdem werden die Daten der Kalibrierfunktion KFE des Ersatzkanals EK korrigiert.
   -- Liegt der Wert ZMK/ZEK unterhalb des Grenzwertbereiches, dann wird daraus abgeleitet, dass Fremdstrahlungseinfluss vorliegt. In diesem Fall wird der letzte vorhergehende Messwert ZMK in einem Speicher gehalten. Zusätzlich wird geprüft, ob der Messkanal MK übersteuert ist, d.h. die Impulsrate oberhalb des nutzbaren Impulsratenbereichs liegt oder der Anodenstrom des Photomultipliers einen oberen Grenzwert überschritten hat:
      --- Solange eine Übersteuerung vorliegt, wird als Messwert der letzte gespeicherte "ungestörte Messwert" ausgegeben. Außerdem wird die automatische Verstärkungsstabilisierung abgeschaltet, d.h. es wird der letzte vor dem übersteuerten Zustand anliegende Hochspannungswert gehalten, solange der übersteuerte Zustand gegeben ist.
      --- Liegt keine Übersteuerung vor, dann wird jedes Mal geprüft, ob der vorhergegangene Messwert gestört war:
         ---- Wenn "Nein", dann wird eine gewisse Stabilisierungszeit (entsprechend der zu erwartenden Dauer der Positionierung eines Fremdstrahlers bei Schweißnahtprüfungsvorgängen) abgewartet und es wird geprüft, ob der Messwert sich stabilisiert hat. Danach wird der Spill-Over-Faktor berechnet und anschließend die Spill-Over-Korrektur für den Messwert ZEK (Füllstand) im Ersatzkanal EK durchgeführt.
         ---- Wenn "Ja", dann wir die Spill-Over-Korrektur für den Messwert ZEK (Füllstand) im Ersatzkanal EK sofort durchgeführt.

In beiden Fällen wird anschließend der korrigierte Messwert ZEK des Ersatzkanals EK ausgegeben.

## Patentansprüche

1. Verfahren zur Erkennung und Unterdrückung von Fremdstrahlungseinflüssen bei radiometrischen Messungen, bei denen die Messwerte einer Messgröße innerhalb eines Messbereichs aus der Zählrate der Strahlung eines Messstrahlers bestimmt werden, mit folgenden Schritten:
- aus dem gemessenen Impulsamplitudenspektrum werden durch Setzen von mindestens zwei Impulsamplituden-Schwellen (DEK, DMK) mindestens zwei Kanäle gebildet, von denen sich der erste zumindest im wesentlichen über das gesamte nutzbare Impulsamplitudenspektrum erstreckt und den Messkanal (MK) bildet, und der mindestens zweite nur einen Teilbereich des nutzbaren Impulsamplitudenspektrums erfasst und mindestens einen Ersatzkanal (EK) bildet,
- aus der Zählrate (ZRM) im Messkanal (MK) werden die Messwerte (ZMK) der Messgröße durch Anwendung einer ersten Kalibrierungsfunktion (KFM) abgeleitet,
- aus der Zählrate (ZRE) in dem mindestens einen Ersatzkanal (EK) werden die Messwerte (ZEK) durch Anwendung mindestens einer zweiten Kalibrierungsfunktion (KFE) abgeleitet,
- eine Verknüpfung zwischen diesen Messwerten (ZMK,ZEK) wird hergestellt,
- Messkanal (MK) und Ersatzkanal (EK) werden so festgelegt, dass der Wert der Verknüpfung sich signifikant ändert, wenn Fremdstrahlung im Messkanal (MK) auftritt, und
- anstelle der aus der Zählrate (ZRM) des Messkanals (MK) gewonnenen Messwerte (ZMK) werden die aus der Zählrate (ZRE) des Ersatzkanals (EK) gewonnenen Messwerte (ZEK) verwendet, wenn der Wert der Verknüpfung einen Grenzwert über/unterschreitet.

2. Verfahren zur Erkennung und Unterdrückung von Fremdstrahlungseinflüssen, **dadurch gekennzeichnet, dass** die Verknüpfung das Verhältnis der Messwerte (ZMK,ZEK) ist.

3. Verfahren zur Erkennung und Unterdrückung von Fremdstrahlungseinflüssen, **dadurch gekennzeichnet, dass** der Teilbereich des Ersatzkanals (EK) oberhalb des wesentlichen Teils des Impulsamplitudenspektrums der Fremdstrahlung liegt.

4. Verfahren zur Erkennung und Unterdrückung von Fremdstrahlungseinflüssen, **dadurch gekennzeichnet, dass** bei einer signifikanten Änderung des Wertes der Verknüpfung ein Fremdstrahlungserkennungssignal erzeugt wird.

5. Verfahren zur Erkennung und Unterdrückung von Fremdstrahlungseinflüssen, **dadurch gekennzeichnet, dass** die Kalibrierungsfunktionen derart gewählt werden, dass ihre Anwendung auf die Zählraten des Messkanals (MK) und des Ersatzkanals (EK) bei gleichem Wert der Messgröße zu gleichen Messwerten (ZEK,ZMK) führt, wenn keine Fremdstrahlung vorhanden ist.

6. Verfahren zur Erkennung und Unterdrückung von Fremdstrahlungseinflüssen, **dadurch gekennzeichnet, dass** die Messgröße der Füllstand eines Behälters (1) ist.

## Claims

1. Method for detecting and suppressing extraneous radiation influences in radiometric measurements, where the measured values of a measuring variable within a measuring range are determined from the counting rate of the radiation of measured radiation, the said method having the following steps:
- by using at least two pulse amplitude thresholds (DEK, DMK), at least two channels are formed from the measured pulse amplitude spectrum, the first of which extends at least substantially over the entire useful pulse amplitude spectrum and forms the measuring channel (MK), and the at least second of which detects only a part range of the useful pulse amplitude spectrum and forms at least one substitute channel (EK),
- the measured values (ZMK) of the measuring variable are derived from the counting rate (ZRM) in the measuring channel (MK) by using a first calibrating function (KFM),
- the measured values (ZEK) are derived from the counting rate (ZRE) in the at least one substitute channel (EK) by using at least one second calibrating function (KFE),
- a relationship is established between the said measured values (ZMK, ZEK),
- measuring channel (MK) and substitute channel (EK) are established such that the value of the relationship alters significantly if extraneous radiation occurs in the measuring channel (MK), and
- the measured values (ZEK) obtained from the counting rate (ZRE) of the substitute channel (EK) are used in place of the measured values (ZMK) obtained from the counting rate (ZRM) of the measuring channel (MK), if the value of the relationship exceeds/falls below a limit value.

2. Method for detecting and suppressing extraneous radiation influences, **characterised in that** the relationship is the ratio of the measured values (ZMK, ZEK).

3. Method for detecting and suppressing extraneous radiation influences, **characterised in that** the part region of the substitute channel (EK) is above the substantial part of the pulse amplitude spectrum of extraneous radiation.

4. Method for detecting and suppressing extraneous radiation influences, **characterised in that** when there is a significant change in the value of the relation, an extraneous radiation detecting signal is generated.

5. Method for detecting and suppressing extraneous radiation influences, **characterised in that** the calibrating functions are selected in such a manner that their application to the counting rates of the measuring channel (MK) and of the substitute channel (EK), with the identical value of the measuring variable, leads to identical measured values (ZEK, ZMK) if there is no extraneous radiation present.

6. Method for detecting and suppressing extraneous radiation influences, **characterised in that** the measuring variable is the fill level of a container (1).

## Revendications

1. Procédé pour la détection et la suppression de l'influence de rayonnements étrangers lors de mesures radiométriques, au cours desquelles on détermine les valeurs mesurées d'une grandeur à mesurer à l'intérieur d'un intervalle de mesure, à partir du taux de comptage du rayonnement d'une source de rayonnement de mesure, avec les étapes suivantes :
- on forme au moins deux canaux à partir du spectre des amplitudes d'impulsions mesuré, en fixant au moins deux seuils d'amplitude d'impulsions (DEK, DMK), canaux dont le premier s'étend au moins sensiblement sur la totalité du spectre utilisable des amplitudes d'impulsions et forme le canal de mesure (MK), et dont l'au moins un deuxième n'englobe qu'une zone partielle du spectre utilisable des amplitudes d'impulsions et forme au moins un canal de rechange (EK),
- on déduit du taux de comptage (ZRM) dans le canal de mesure (MK), les valeurs mesurées (ZMK) de la grandeur à mesurer, grâce à l'utilisation d'une première fonction d'étalonnage (KFM),
- on déduit du taux de comptage (ZRM) dans l'au moins un canal de rechange (EK), les valeurs mesurées (ZEK), grâce à l'utilisation d'au moins une deuxième fonction d'étalonnage (KFE),
- on établit une relation entre ces valeurs mesurées (ZMK, ZEK),
- on définit le canal de mesure (MK) et le ou les canaux de rechange (EK) de telle façon que la valeur de la relation est significativement modifiée lorsque des rayonnements étrangers apparaissent dans le canal de mesure (MK), et
- lorsque la valeur de la relation est inférieure/supérieure à une valeur limite, on utilise les valeurs mesurées (ZEK) extraites à partir du taux de comptage (ZRE) du canal de rechange (EK), à la place des valeurs mesurées (ZMK) extraites à partir du taux de comptage (ZRM) du canal de mesure (MK).

2. Procédé pour la détection et la suppression de l'influence de rayonnements étrangers, **caractérisé en ce que** la relation est le rapport des valeurs mesurées (ZMK, ZEK).

3. Procédé pour la détection et la suppression de l'influence de rayonnements étrangers, **caractérisé en ce que** la zone partielle du canal de rechange (EK) se situe au-dessus de la partie principale du spectre des amplitudes d'impulsions des rayonnements étrangers.

4. Procédé pour la détection et la suppression de l'influence de rayonnements étrangers, **caractérisé en ce que** l'on produit un signal de détection de rayonnement étranger en cas de changement significatif de la valeur de la relation.

5. Procédé pour la détection et la suppression de l'influence de rayonnements étrangers, **caractérisé en ce que** l'on choisit les fonctions d'étalonnage de telle sorte que leur application aux taux de comptage du canal de mesure (MK) et du canal de rechange (EK) donne des valeurs mesurées (ZEK, ZMK) égales pour une même valeur de la grandeur à mesurer, en l'absence de rayonnement étranger.

6. Procédé pour la détection et la suppression de l'influence de rayonnements étrangers, **caractérisé en ce que** la grandeur à mesurer est le niveau de remplissage d'un récipient.
